# EUROPEAN PATENT SPECIFICATION

(11) **EP 4 420 335 B1**
(45) Date of publication and mention of the grant of the patent: **02.09.2026**
(21) Application number: 22911841.9
(22) Date of filing: 20.12.2022
(51) Int. Cl.: H04L 67/51, H04W 4/70, H04L 65/1063, H04L 65/1073, H04L 67/125, H04W 4/80

(54) **A PERSONAL IOT NETWORK AND RESIDENTIAL NETWORK MANAGEMENT SERVER PMS IN A PERSONAL IOT NETWORK AND METHOD THEREOF**
PERSÖNLICHES IOT-NETZWERK UND HEIMNETZWERKVERWALTUNGSSERVER-PMS IN EINEM PERSÖNLICHEN IOT-NETZWERK UND VERFAHREN DAFÜR
RÉSEAU IOT PERSONNEL ET SERVEUR DE GESTION DE RÉSEAU RÉSIDENTIEL PMS DANS UN RÉSEAU IOT PERSONNEL ET PROCÉDÉ ASSOCIÉ

(30) Priority: 21.12.2021 IN 202141059826; 14.12.2022 IN 202141059826
(43) Date of publication of application: 28.08.2024
(73) Proprietor: Samsung Electronics Co., Ltd., Suwon-si, Gyeonggi-do 16677 (KR)
(72) Inventor: SHAH, Sapan Pramodkumar, Bangalore 560037 (IN); PATTAN, Basavaraj Jayawant, Bangalore 560037 (IN); RAMAMOORTHY, Arunprasath, Bangalore 560037 (IN)
(74) Representative: Gulde & Partner
(86) International application number: PCT/KR2022/020804
(87) International publication number: WO 2023/121208

(56) References cited:
- CN-A- 113 364 833
- US-A1- 2021 368 341
- US-A1- 2021 368 341
- "3rd Generation Partnership Project; Technical Specification Group Services and System Aspects; Service requirements for the 5G system; Stage 1 (Release 18)", vol. SA WG1, no. V18.4.0, 24 September 2021 (2021-09-24), pages 1 - 107, XP052056697, Retrieved from the Internet <URL:https://ftp.3gpp.org/Specs/archive/22_series/22.261/22261-i40.zip 22261-i40.doc> [retrieved on 20210924]
- ANONYMOUS: "3rd Generation Partnership Project; Technical Specification Group Services and System Aspects; Study on Personal Internet of Things (PIoT) networks (Release 18)", 3GPP STANDARD; TECHNICAL REPORT; 3GPP TR 22.859, no. V18.1.0, 24 September 2021 (2021-09-24), pages 1 - 51, XP052056705
- ANONYMOUS: "3rd Generation Partnership Project; Technical Specification Group Services and System Aspects; Service requirements for the 5G system; Stage 1 (Release 18)", 3GPP STANDARD; TECHNICAL SPECIFICATION; 3GPP TS 22.261, vol. SA WG1, no. V18.4.0, 24 September 2021 (2021-09-24), pages 1 - 107, XP052056697
- ZHENHUA XIE / VIVO: "Email discussion on Personal IoT Network (PIN)", 3GPP DRAFT; S2-2108658, vol. SA WG2, 8 November 2021 (2021-11-08), pages 1 - 7, XP052076952
- BISWA PS SAHOO; DEEPAK PUTHAL; SARAJU P. MOHANTY; PRASHANT PILLAI: "Personal Internet of Things (PIoT): What is it Exactly?", ARXIV.ORG, 24 May 2021 (2021-05-24), 201 Olin Library Cornell University Ithaca, NY 14853 , pages 1 - 4, XP081970309, DOI: 10.1109/MCE.2021.3077721

## Description

### [Technical Field]

The disclosure relates to communication networks and more particularly to personal internet of things (IoT) networks (PINs) and method for managing PINs.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end- to-end AI support functions, and next-generation distributed computing technology for implementing services at levels of complexity exceeding the limit of UE operation capability by utilizing ultra-high-performance communication and computing resources.

IoT capabilities have been designed for devices that communicate using a traditional cellular network, which may include battery constrained devices. In some contexts, a concept of a private network has been introduced which adds benefit for devices that generate very little user plane traffic (for example, sensors). A traditional cellular operator might not have to dedicate resources to the devices in the network and the traffic can stay within the local private network environment.

Personal IoT network (PIN) is based on greatly increasing number of consumers IoT devices. The devices can either be wearable devices (i.e., devices on a person such as cameras, headsets, watches, earphones, health monitors, and the like) or can be IoT devices in home (for example, smart lights, cameras, thermostats, door sensors, voice assistants, speakers, fridge, washing machines, and so on). Users can create PINs out of all these IoT devices.

However, the adoption rate of PINs has been low compared to a smartphone. One of the reason is due to IoT devices using a multitude of different access technologies. For example, a smart watch uses Bluetooth to connect with a phone, while the printer application uses the WLAN to connect with the printer device. However, there is no common application architecture to support PINs with minimum basic capabilities to allow IoT devices to communicate within the PIN easily.

The "5G for residential" or "customer premises network" can provide 5G services inside homes and enterprises. This encompasses an integration of wireline and wireless communication (for example, a residential gateway that is connected to a 5G core network), where a 5G experience is to be provided to users even when they are inside home. However, it also encompasses a convergence of services that are provided in mobile networks (for example, mobile Internet access) with services that are provided in (W)LAN networks (for example, printer service, audio streaming), where services that are provided on either 5G mobile networks or (W)LAN networks work seamlessly across these environments. The personal IoT network (PIN) and residential network is together called as PIRates network.

3GPP TR 22.858 noted that to a large extent, mobile services are used by users that are not on the move. Further, hourly patterns for mobile data traffic show that the highest mobile data usage is in the evening when people are enjoying mobile data services whilst at home. The residential environment is where a large portion of 5G traffic will be handled. With video/TV services and AR/VR gaming, residential users demand high bitrates and with a concentration of media traffic, can easily require significant capacities.

Currently, fixed broadband services work on a different premise than mobile services. With mobile services, each individual device is known and identifiable in the mobile network which implies that services can be provided to individual devices. With fixed broadband services, the operator provides internet access to a residential gateway. Behind that residential gateway is usually a LAN, but individual devices on that LAN are not known or identifiable in the core network. For an integrated fixed broadband or mobile residential 5G offering, IoT would be beneficial if devices behind an eRG can also be known and identified in the core network.

Each entity within the PIRates network requires a unique identity to identify themselves within the PIRates network. However, it is not clear who will generate the unique identity for the entities in the PIRates network. Further, once new IoT device can request for membership of the PIRates network. It is not clear how the new IoT device will be added to the PIRates network and how the device will receive information related to the PIRates network in order to access PIRates network and communicate with other PIRates entities.

The above information is presented as background information only to assist with an understanding of the disclosure. No determination has been made, and no assertion is made, as to whether any of the above might be applicable as prior art with regard to the disclosure.

Conventional approaches are disclosed in 3GPP TS 22.261 (Release 18) and US 2021/368341A1.

### [Disclosure of Invention]

### [Solution to Problem]

The present invention is set out in the appended set of claims.

Embodiments of the disclosure provide architectures for personal internet of things (IoT) networks (PINs).

Embodiments of the disclosure provide an interface to interact with one or more functional entities with management capabilities in the PINs.

Embodiments of the disclosure provide an interface to interact with one or more functional entities with gateway capabilities in the PINs.

Embodiments of the disclosure provide an interface for gateway to interact with application server hosted within the PINs.

Embodiments of the disclosure provide an interface for gateway to interact with a PIN owner and/or one or more authorized users.

Embodiments of the disclosure provide a procedure to add a new IoT device to the personal IoT network.

Embodiments of the disclosure provide a procedure to provide personal IoT network related information to the IoT devices added to the network.

In an example embodiment, A PIRates (personal internet of things (IoT) network and residential network) management server (PMS) in a personal IoT network (PIN) is provided. The PIM includes at least one processor configured to support management capabilities of a PIRates network; and at least one interface supporting interaction between the PMS, a PIRates gateway configured to provide gateway functionality within the PIRates network, and at least one PIN element configured with PIRates clients which communicate within the PIRates network..In an example embodiment, a method performed by a personal internet of things (IoT) Network (PIN) including a PIRates (personal IoT network and residential network) management server (PMS), a PIRates gateway, and at least one PIN element configured with PIRates clients is provided. The method includes authorizing, by the PMS, a first PIRates client of the PIRates clients upon receiving a first message including information on the first PIRates client from the first PIRates client; sending, by the PMS, a first response message to the first PIRates client; and sending, by the PMS, a second message including information on the first PIRates client to a second PIRates client of the PIRates clients.

To further illustrate the advantages and features of the disclosure, a more particular description will be rendered by reference to various example embodiments thereof, which is illustrated in the appended drawings. It is appreciated that these drawings depict only example embodiments of the disclosure and are therefore not to be considered limiting its scope. The disclosure will be described and explained with additional specificity and detail with reference to the accompanying drawings.

### [Brief Description of Drawings]

The above and other aspects, features, and advantages of certain embodiments of the disclosure will be more apparent from the following detailed description, taken in conjunction with the accompanying drawings, wherein like characters represent like parts throughout the drawings, and in which:
FIG. 1 depicts an architecture of PIN while providing a PIRates service to one or more PIN elements in customer premises in accordance with various embodiments of the disclosure;
FIG. 2a depicts an example of application architecture of the PIN for providing the PIRates service to the one or more PIN elements in customer premises in accordance with various embodiments of the disclosure;
FIG. 2b depicts a block diagram illustrating a PIRates management server (PMS) in accordance with various embodiments of the disclosure;
FIG. 3 depicts the signaling flow diagram between the PIN elements and a functional entity, to acquire PIN details in accordance with various embodiments of the disclosure; and

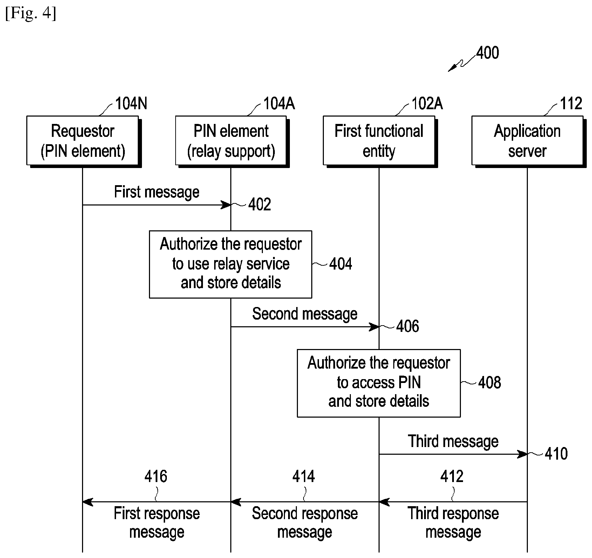

FIG. 4 is a signaling flow diagram depicting the PIN element communicating with an application server in accordance with various embodiments of the disclosure.Further, skilled artisans will appreciate that elements in the drawings are illustrated for simplicity and may not have necessarily been drawn to scale. For example, the flowcharts illustrate the method in terms of operations involved to help to improve understanding of aspects of the disclosure. Furthermore, in terms of the construction of the device, one or more components of the device may have been represented in the drawings by conventional symbols, and the drawings may show those specific details that are pertinent to understanding the various example embodiments of the disclosure so as not to obscure the drawings with details that may be readily apparent to those of ordinary skill in the art.

### [Mode for the Invention]

To be better understood by those skilled in the art, the disclosure is described in the following description with reference to the attached drawings.

The ensuing description provides exemplary embodiments only. The embodiments of the disclosure are provided with specific details to provide a thorough understanding of such embodiments. However, these embodiments may be practiced without the provided specific details. For example, various elements such as for e.g., circuits, systems, processes, and other units may be shown as components in block diagram form in order not to obscure the embodiments in unnecessary detail. Also, the disclosure may be embodied in many different forms and should not be construed as limited to the embodiments set forth herein; rather, these embodiments are provided so that this disclosure will be thorough and complete, and will fully convey its scope to those skilled in the art. It should be understood that the function and arrangement of elements might be changed without departing from the essence and scope of the disclosure as set forth. The terminology used in the detailed description of the particular exemplary embodiments illustrated in the accompanying drawings is not intended to be limiting. In the drawings, like numbers refer to like elements.

Also, it is pertinent to note that some of the embodiments may be described as a process which is for e.g., in the form of a flow diagram, a flowchart, a structure diagram, a data flow diagram, or a block diagram. In these embodiments the operations may be described as a sequential process, however many of the operations can be performed in parallel or concurrently. In a process an order of the operations may also be re-arranged. In addition, a figure may indicate that a process is terminated when its operations are completed, however there may be additional steps that are not included in the figure.

Additionally, various features of the disclosure can each be used independently of one another or with any combination of other features. Some of the problems as discussed above may or may not be addressed by an individual feature of the disclosure. However, some of these problems may be addressed by a combination of features of the disclosure.

Terms such as "exemplary" and/or "demonstrative" indicate an illustration, an instance, or an example, and the disclosed subject matter is not limited by such examples. Additionally, it should be noted that no "exemplary" and/or "demonstrative" aspect or design described herein may be construed as preferred or advantageous over other aspects or designs, and it also should not preclude equivalent exemplary structures and techniques known to those of ordinary skill in the art.

Furthermore, the detailed description or the claims may contain terms such as "has," "contains," and "includes," etc., however it is important to note that such terms are intended to be inclusive-in a manner similar to an open transition word such as the term "comprising"-without precluding any additional or other elements.

As used herein, a "processing unit" or "operating processor" includes one or more processors, microprocessors, microcomputers, microcontrollers, digital signal processors, central processing units, state machines, logic circuitries, and / or any devices that manipulate signals based on operational instructions. The processing unit may also refer to any logic circuitry for processing instructions. Among other capabilities, the processing unit may be configured to fetch and execute computer-readable instructions stored in the memory. More specifically, the processor or processing unit is a hardware processor.

As used herein, "storage unit" or "memory unit" refers to a machine or computer-readable medium including any mechanism for storing information in a form readable by a computer or similar machine. The computer-readable medium may include a volatile memory, such as static random-access memory (SRAM) and dynamic random-access memory (DRAM), and / or non - volatile memory, such as read only memory (ROM), erasable programmable ROM, flash memories, hard disks, optical disks, magnetic tapes and/or other types of machine-accessible storage media. The storage unit stores at least the data that may be required by one or more units of the system to perform their respective functions.

As used herein, "a mobile device", "a handheld device", "a wireless communication device", "a mobile communication device", "a user equipment", "a user device", "a smart-user-device", "a smart-device", "an electronic device", and "a communication device" may be any electrical, electronic and/or computing device or equipment, capable of implementing the features of the disclosure. The mobile device may include, but is not limited to, a mobile phone, smart phone, a laptop, a tablet computer, a wearable device or any other computing device which is capable of implementing the features of the disclosure. Also, the mobile device may contain at least one input means configured to receive an input from one or more unit(s)/system(s) which are required to implement the features of the disclosure.

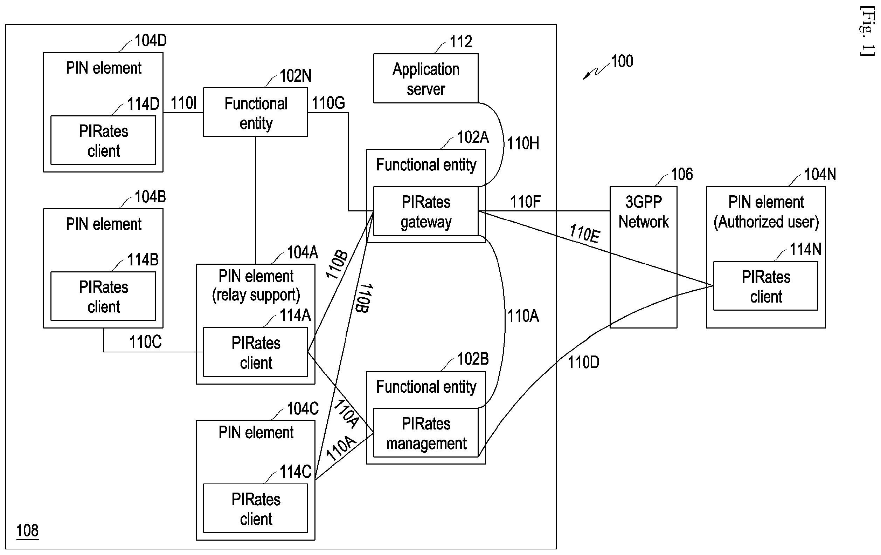

The embodiments herein achieve a personal internet of things (IoT) network (PIN). Referring now to the drawings, and more particularly to FIGS. 1 through 4, where similar reference characters denote corresponding features consistently throughout the figures, there are shown at least one embodiment.

FIG. 1 depicts an architecture of PIN 100 while providing a service to one or more PIN elements 104A-104N in customer premises in accordance with various embodiments of the disclosure.

Referring to FIG. 1, the architecture of PIN 100 includes one or more functional entities 102A-102N, an application server 112, one or more PIN elements 104A-104N, and one or more interfaces 110A-110Q. The one or more functional entities 102A-102N are configured as at least one of a PIRates management server (PMS), a PIRates gateway, and a premises radio access station (PRAS) for PIRates network. The application server 112 is configured to host the PIN 200. The PIN elements 104A-104N are configured with the PIRates client 114A-114N. The one or more interfaces 110A-110Q supports interaction(s) between the application server 112, the PMS, the PIRates gateway, the PIRates clients 114A-114N, and the PRAS. The PMS supports management capabilities of the PIRates network. The authorized user creates and manages the PIRates network via the PMS, and the PIRates gateway is a server entity providing gateway functionality within the PIRates network.

Embodiments herein disclose that the PIN elements 104A-104N are devices which communicate within the PIRates network. The PIN elements 104A-104N act as relay to other PIN elements 104A-104N. A guest PIN element in another PIN accesses a home PIN using the PIRates gateway.

Embodiments herein disclose that the one or more interfaces 110A-110Q connect the PIRates client 114A of the PIN element 104A to another PIN element 104B acting as the relay. The functional entity 102A for the PIN network, has gateway capabilities and provides gateway functionalities to the PIN element 104A-104N. The functional entity 102A, for a cognitive packet network (CPN) network provides functionalities of an evolved residential gateway (eRG). The PMS authorizes the PIN elements 104A-104N to access the PIN network 100. The PMS assigns a unique identity to the PIRates client 114A. The one or more functional entities 102A-102N enable a network operator or an authorized user to configure the policies in the PIN 100. The one or more functional entities 102A-102N enable service discovery of other PIN elements 104A-104N. The PMS maintains a registration of the PIN elements including the PIN element's available services, capability to act as the relay to other PIN elements 104A-104N. The PMS enables service discovery of the other PIN Elements 104A-104N. The PIN elements 104A-104N can include user equipments (UEs).

Embodiments herein disclose that a first functional entity 102A performs a role of a server, which supports gateway capability(IES). In an embodiment herein, the first functional entity 102A acts as an enhanced residential gateway (eRG) for cognitive packet network (CPN). In an embodiment herein, the first functional entity 102A may act as the PIN element 104A with gateway capability (PEGC) for the PIN 100. The PIRates gateway (PG) in the first functional entity 102A provides a gateway functionality for the PIRates network (for the CPN or the PIN 100).

In an embodiment herein, a second functional entity 102B may also perform a role of a server supporting management capability for the PIRates network (for example, the PIN 100). The second functional entity 102B acts as the PIN element 104B with management capability (PEMC) for the PIN 100. The PIRates management server (PMS) in the second functional entity 102B provides management capabilities.

A third functional entity 102C is a base station installed within a customer premise 108 (for example office or home). The third functional entity 102C provides radio access to the PIN elements 104A-104N. The third functional entity 102C acts as a premises radio access station (PRAS) for the PIRates network (for example, the CPN).

Interactions between the PMS 102B and the PIRates clients 114A and 114C are supported over a first Interface 110A. Interactions between the PMS 102B and the PG 102A may also be supported over the first Interface 110A. Interactions between the PG 102A and the PIRates clients 114A and 114C are supported over a second Interface 110B. The interactions between the PIRates clients 114A-114B from different PIN elements 104A-104B are supported over a third Interface 110C. The interactions between the PMS 102B and the PIRates client 114N of the authorized user are supported over a fourth interface 110D. The interactions between the PG 102A and the PIRates clients 114N of the authorized user are supported over a fifth interface 110E. The PG 102A interacts with a fifth generation (5G) Core network over a sixth interface 110F. The functional entity 102N (e.g., PRAS) interacts with the PG 102A over a seventh interface 110G. The PG 102A interacts with the application server 112 within the PIRates network over an eighth interface 110H. The PIN element 114D interaction with the n^{th} functional entity 102N (e.g., the PRAS) over a ninth interface 110I.

The architecture, as depicted in FIG. 1, supports the PIN 100 direct connection between two PIN elements without a 3^{rd} generation partnership project radio access network (3GPP RAN) or a core network entity. The PIN 100 connects through one or more relay PIN elements amongst other PIN Elements. The PIN 100 supports access to the 5G network and services for an authorized PIN element (wherein an authorized PIN element is linked to a 3GPP subscription and provisioned with credentials) via one or more PIN elements 104A-104N with gateway capability or directly via non-3GPP access. The PIN 100 enables a PIN element of the PIN 100 or a non-3GPP device that is not the PIN element of the PIN 100 to join the network.

Embodiments herein disclose that the second interface 110B and the third interface 110C can be the same. For example, a single interface (either the second interface 110B or the third interface 110C) can support interactions between the PIRates clients 114A-114N, the PIRates Gateway, interactions between the PIRates clients 114A-114N of different PIN elements. The second interface 110B and the sixth interface 110F can be same.

Embodiments herein disclose that when the PG 102A and the PMS 102B are colocated, the interactions between the PIRates Management Server and the PIRates client on authorized user's device can be implemented via the fifth interface 110E; in such a case, the fourth interface 110D may not be required.

Embodiments herein disclose that the interactions between the PIRates management server and the PIRates client on the authorized user's device can be implemented, via the first functional entity 102A using the first interface 110A and the fifth interface 110E; in such a case, the fourth interface 110D may not be required.

Embodiments herein disclose that the PIN network 100, the PIN element 104A with relay capability can connect to the first functional entity 102A using the second interface 110B. While in the CPN network, the PIN element 104A with relay capability can connect to the first functional entity 102A using the second interface 110B or via the functional entity 102N (i.e., PRAS).

Embodiments herein disclose that when the authorized user is part of the CPN or PIN 100, the PIRates gateway uses the second interface 110B to interact with the PIRates client on the authorized user's device and the PMS 102B uses the first interface 110A to interact with the PIRates client on the authorized user's device.

Embodiments herein disclose that PIRates gateway (PWC) is a server entity providing gateway functionality within the PIRates network. For the PIN network 100, the PWC provides functionalities of the PIN element with gateway capability (PEGC). For CPN network, the PWS provides functionalities of an evolved residential gateway (eRG). The PWS supports internet protocol (IP) traffic offload within the CPN. The PWC provides connectivity to the 5G network, and allows authorized the PIN elements to connect to the 5G network.

Embodiments herein disclose that PMS 102B supports management capabilities for the PIRates network. For the PIN network 100, the PMS 102B provides functionalities of the PIN element with the management capability (PEMC). The PMS 102B also provides a network operator or an authorized user to configure policies in the PIN 100. The PMS 102B provides life span information of the PIN 100 to the authorized user or the PIN elements. The PMS 102B maintains registration of the PIN elements including the PIN element's available services, capability to act as a relay to other PIN elements.

Embodiments herein disclose that PMS 102B configures and manages the PIRates network by authorizing the PIN elements to connect to the network, authorizing the first functional entity 102A authorizing the second functional entity 102B, configuring the PIN elements to enable service discovery of other PIN Elements, adding new PIN elements to the PIRates network, assigning unique identity to the PIRates client, configuring the PIN elements to enable direct communications, and configuring the PIN elements to communicate with each other when gateway device is unavailable.

Embodiments herein disclose that the PG 102A and the PMS 102B can be part of a single physical device.

Embodiments herein disclose that the functional entity 102N acts as a base station installed in the PIRates network. The functional entity 102N provides premises radio access station (PRAS) functionalities (providing radio access) for the PIN elements within the CPN. The functional entity 102N can be configured to use licensed, unlicensed, or both frequency bands. Connectivity between the functional entity 102N and the PIN elements can use NR radio access (Uu) or non-3GPP radio access. The functional entity 102N can be called as PIRates base station or PRAS or any other suitable name.

Embodiments herein disclose that the PIRates client 114A-114N registers an available service and capabilities to the PIN 100. The PIRates client 114A-114N performs service discovery of other PIN elements. The PIRates client 114A-114N communicate with PIRates clients of other PIN elements. The PIRates client 114A-114N act as a relay for other PIN elements. The PIRates client 114A-114N selects relay for direct communication. The PIRates client 114A-114N indicates whether the PIN element, in which the PIRates client resides, is discoverable or not.

The PIN elements 104A-104N are devices (3GPP or non-3GPP) which can communicate within the PIRates network. In an embodiment herein, the PIN element 104A-104N may include an application client for a specific application. The PIN element 104A-104N may include the PIRates client in order to enable access to the PIRates network and enable communication with other PIN elements in the PIRates network. The PIN element 104A-104N may support relay capability and act as a relay for other PIN elements which cannot directly communicate with one or more other entities, such as the first functional entity 102A.

The PIN element is referred to herein interchangeably as PIRates UE or PIRates entity or PIRates element or any other suitable name.

A guest PIN element is the PIN element (as described above) in another PIN and can access the home PIN using the gateway function of another PIN.

Embodiments herein disclose that the first interface 110A supports interactions with the PMS 102B. Both PIRates client and PG interacts with the PMS 102B over the first interface 110A. The first interface 110A supports direct connection over 3GPP or non-3GPP RAT. During the interaction between the PMS 102A and PIRates clients 114A and 11C, the first interface 110A authorizing the PIRates clients 114A-114C to access the PIRates network. The first interface 110A registers/de-registers the PIRates clients 114A and 114C to the PMS 102B to enable access for the PIRates network. The first interface 110A provide service discovery of other PIN elements. The first interface 110A provide discovery and selection of relay PIN elements. The first interface 110A provides unique identity for the PIRates client.

Embodiments herein disclose that the second interface 110B supports interactions with the PG 102A. The PIRates clients interact with the PG 102A over the second interface 110B. The second interface 110B supports direct connection of the PIN elements over 3GPP or non-3GPP RAT to the PIN 100. The PIRates clients use the second interface 110B to communicate with other PIRates client within the PIRates network or to access the 3GPP network. The second interface 110B connects to PIRates client of the PIN element 104A and 104C to the first functional entity 102A (i.e., the entity with gateway capability). The second interface 110B connects to the PIN element to the PG 102A acting as the gateway. The second interface 110B can be called as any other suitable name.

Embodiments herein disclose that the interactions between the PIRates clients are supported over the third interface 110C. The third interface 110C supports a direct connection over 3GPP or non-3GPP radio access technology (RAT). The third interface 110C connects to the PIRates client of the PIN element to another PIN element acting as a relay. The third interface 110C connects to the PIN element to the PIRates client of another PIN element acting as a relay. The third interface 110C can be called as any other suitable name.

Embodiments herein disclose that the fourth interface 110D supports interaction between the PMS 102B and the PIRates client of the authorized PIN element. When an authorized PIN element is within PIRates network, fourth the interface 110D is same as the third interface 110C. When an authorized UE or PIN element is outside the PIRates network, the fourth interface 110D can be realized using the first interface 110A and the fifth interface 110E. The fourth interface 110D can be called as any other suitable name.

Embodiments herein disclose that the fifth interface 110E supports interaction between the PG 102A and the PIRates client of the authorized PIN element. When authorized the PIN element is within the PIRates network, fifth interface 110E is same as the third interface-3. When authorized UE or PIN element is outside the PIRates network, the PG interacts via 3GPP core network. In an embodiment, the fifth interface 110E can be called as any other suitable name.

Embodiments herein disclose that the PG 102A communicates with the 3GPP core network over the sixth interface 110F. The sixth interface 110F allows network operator to provision the PG 102A, to configure the n^{th} functional entity (for example, the PRAS), to create and manage the PIRates network via the PMS 102B. The sixth interface 110F supports wireless access, fixed broadband access or hybrid access to the PIN elements. The sixth interface 110F can be called as any other suitable name.

Embodiments herein disclose that the functional entity 102N is connected to the PG 102A via wireline or wireless link, and the functional entity 102N interacts over the seventh interface 110G. The seventh interface 110G can be called as any other suitable name.

Embodiments herein disclose that the PG 102A interacts with the application server 112 hosted within the PIRates network over the eighth interface 110H. The eighth interface 110H can be called as any other suitable name.

Embodiments herein disclose that the PIN elements can use any suitable non-3GPP technology (for example, Ethernet, optical, WLAN) to connect with the functional entity 102N using the ninth interface 110I.

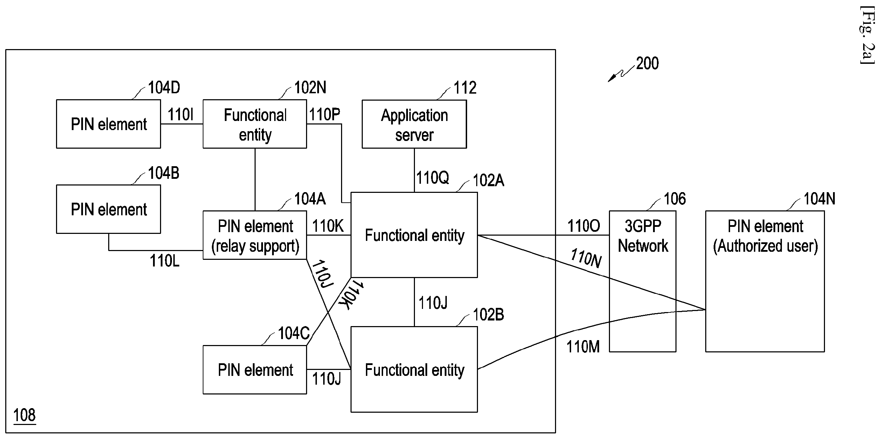

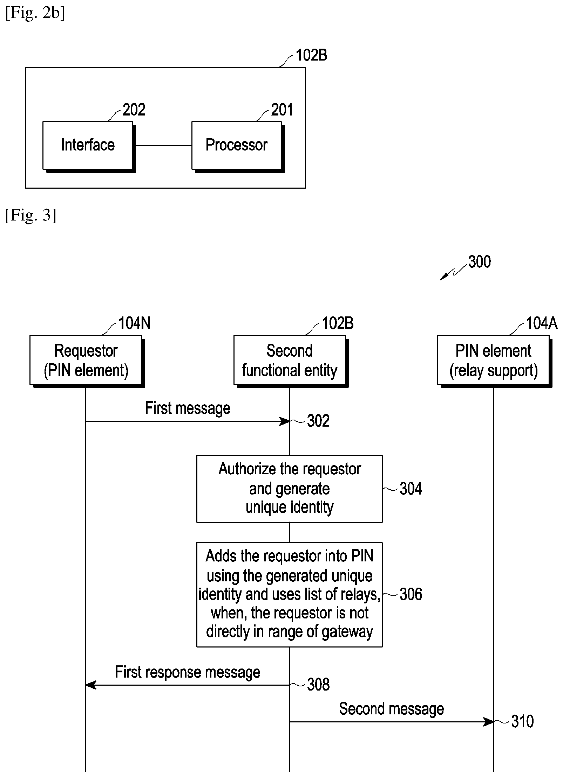

FIG. 2a depicts an example of application architecture of the PIN 200 for providing the PIRates service to the one or more PIN elements 104A-104N in customer premises 108 in accordance with various embodiments of the disclosure. FIG. 2b depicts a block diagram illustrating a PIRates management server (PMS) in accordance with various embodiments of the disclosure.

Referring to FIG. 2a, the first functional entity 102A performs the role of the server supporting gateway capability. The first functional entity 102A acts as the enhanced residential gateway (eRG) for the CPN or first functional entity 102A acts as the PIN element with the gateway capability (PEGC) for the PIN 200. The second functional entity 102B performs the role of the server supporting management capability(IES) for the PIRates network (for example, the PIN 200). The second functional entity 102B acts as the PIN element with the management capability (PEMC) for the PIN 200. The functional entity 102N is a base station installed within the customer premise 108 (office or home) providing radio access to the PIN elements 104A-104N. The functional entity 102N acts as the premises radio access station (PRAS) for the PIRates network (for example, the CPN). The interactions between the second functional entity 102B (i.e., the entity with the management capability) and the PIN elements are supported over the first interface 110J.

Referring to FIG. 2b, the second functional entity 102B includes at least one processor 201 and at least one interface 202. The at least one processor 201 is configured to support management capabilities of a PIRates network, and at least one interface 20 support interaction between the PMS, a PIRates gateway configured to provide gateway functionality within the PIRates network, and at least one PIN element configured with PIRates clients which communicate within the PIRates network. The at least one processor 201 may perform a method according to an example embodiment. Each processor herein comprises processing circuitry.

Referring to FIG. 2a, The interactions between the second functional entity 102B (i.e., entity with the management capability) and the first functional entity 102A (i.e., entity with gateway capabilities) are supported over a eleventh interface 110K. The interactions between the first functional entity 102A (i.e., entity with the gateway capabilities) and the PIN elements are supported over a twelfth interface 110L. The interactions between different PIN elements are supported over thirteenth interface 110M. The interactions between the second functional entity 102B (i.e., entity with the management capability) and the authorized PIN element are supported over a fourteenth interface 110N. The interactions between the first functional entity 102A (i.e., entity with gateway capabilities) and authorized PIN element are supported over fifteenth interface 110O. The first functional entity 102A (i.e., entity with gateway capabilities) interacts with 5G Core network over sixteenth interface 110P. The functional entity 102N (e.g., PRAS) interacts with functional entity-1 (i.e., entity with gateway capabilities) over seventeenth interface 110Q. The first functional entity 102A (i.e., entity with gateway capabilities) interacts with application server 112 within PIRates network over eighteenth interface (not show in figures). The interaction of the PIN elements with the functional entity (e.g., PRAS) is over a nineteenth interface (not show in figures).

Embodiments herein disclose that the eleventh interface 110K and the thirteenth interface 110M can be the same. For example, a single interface (either the eleventh interface 110K or the thirteenth interface 110M) will support interactions between the first functional entity 102A (i.e., entity with the gateway capabilities) and the PIN elements, as well as interactions between different PIN elements.

In an embodiment, eleventh interface 110K and the fifteenth interface 110O can be the same.

In an embodiment, when the first functional entity 102A (i.e., entity with the gateway capability) and the second functional entity 102B (i.e., entity with the management capability) are collocated, the interactions between the second functional entity 102B and authorized user's device can be implemented via the sixteenth interface 110N. In such case, the fourteenth interface is not required.

The embodiments disclosed herein can be implemented through at least one software program running on at least one hardware device and performing network management functions to control the elements. The elements shown in FIGS. 1 and 2 can be at least one of a hardware device, or a combination of hardware device and software module.

FIG. 3 depicts the signalling flow diagram 300 between the PIN elements and a functional entity, to acquire PIN details in accordance with various embodiments of the disclosure.

Referring to FIG. 3, at step 302, a first message is sent from requestor (PIN element 104N) to the second functional entity 102B. At step 304, the second functional entity 102B authorizes the requestor and generates a unique identity for the first message. At step 306, the second functional entity 102B adds the requestor into the PIN 100 using the generated unique identity and uses a list of relays, when, the requestor is not directly in range of gateway. At step 308, the second functional entity 102B send first response message to the requestor which includes the PIN details. At step 310, the second functional entity 102B sends a second message to the PIN element 104A. The various actions in method 300 may be performed in the order presented, in a different order or simultaneously. Further, in some embodiments, some actions listed in FIG. 3 may be omitted.

The PIN details comprise of information such as the unique identity of the PIN element or the PIRates client, the list of other PIN elements which can be used as the relay by the requestor, identity of the PIN 100, identity of the gateway, address of the gateway, lifetime of the PIN 100 and other PIN information and the like. The requestor can be the PIN element or the PIRates client within the PIN element. The requestor entity indicates the PMS 102B about the requestors capabilities and requests to be add into the PIN 100 managed by the PMS 102B. The requestor is provisioned with the PMS address (for example, by authorized user using an offline method).

The requestor sends a first message to the second functional entity 102B (i.e., entity with management capability) or the PMS 102B. The first message informs the PMS 102B that the requestor entity has been newly added into the PIN 100 by the authorized user. The first message includes a user readable name of the requestor, manufacturer details, list of application identities on the requestor, capabilities of the requestor (such as whether the requestor supports relay capability or not, discoverable by other PIN elements within PIN, discoverable by other UEs outside the PIN, and the like), access type supported for the communication, a Layer-2 address of the requestor and other required parameters. The first message also includes a set of actions applicable on the requestor. For example, for a smart light, the set of actions include switch on, switch off, increase or decrease brightness and the like. Similarly for air conditioner (AC), the set of actions include switch on, switch off, increase or decrease temperature, change fan speed or direction, and the like. The requestor generates the unique identity for the requestor and includes the unique identity in the first message. The first message also includes the unique identity of the first message which can be used to correlate the first response message.

Upon receiving the first message from the requestor, the second functional entity 102B (i.e., entity with the management capability) or the PMS authorizes the requestor. To authorize the requestor, the second functional entity 102B or the PMS may communicate with the authorized user. If the requestor is authorized, the second functional entity 102B generates a unique identity for the requestor. The second functional entity 102B also generates a list of other PIN elements which can be used as relay(s) by the requestor, when the requestor is not directly within communication range of the first functional entity 102A. The second functional entity 102B adds the requestor to the PIN 100 and stores the requestor's details received in the first message into a table along with the requestor's unique identities and list of another PIN element which can be used as the relay by the requestor.

If the first message already includes the identity of the requestor, then the second functional entity 102B validates uniqueness of the identity present in the first message. If the identity available in the first message is already assigned to other PIN element within PIN 100, then the second functional entity 102B generates the unique identity of the requestor. If the identity available in the first message has not been assigned to other PIN element then the second functional entity 102B accepts the identity present in the first message. The first response message also includes the list of application servers hosted within PIN 100, their respective identities, address to reach list of application servers and other required details based the list of application identities present in the first message.

One or more application servers send the first response message to the requestor. The first response message includes the unique identity of the requestor, list of other PIN elements (which can be used as a relay by the requestor), identity of the PIN, identity of the gateway, address of the gateway, lifetime of the PIN and other PIN information. The list of application servers sends the second message to indicate or notify the PIN elements which can act as a relay for the requestor. The second message includes the unique identity of the requestor, the layer-2 address of the requestor, the list of applications on the requestor, user readable name of the requestor and other information as required. The PIN element stores the details about the requestor which can use relay service provided by the PIN element.

FIG. 4 is a signalling flow diagram 400 depicting the PIN element communicating with the application server in accordance with various embodiments of the disclosure.

Referring to FIG. 4, at step 402, the requestor sends the first message to the PIN element 104A. At step 404, the PIN element 104A authorizes the requestor to use relay service and store details of the requestor. At step 406, a second message is sent to the first functional entity 102A by the PIN element 104A. At step 408, the first functional entity 102A authorizes the PIN element to use relay service and store details of the PIN element 104A. At step 410, the first functional entity 102A sends a third message to the application server 112. At step 412, the first functional entity 102A receives a third response message from the application server 112. At step 414, the PIN element 104A receives a second response message from the first functional entity 102A. At step 416, the requestor receives the first response message from the PIN element 104A. The various actions in method 400 may be performed in the order presented, in a different order or simultaneously. Further, in some embodiments, some actions listed in FIG. 4 may be omitted.

Consider that the requestor is not within direct communication range of the first functional entity 102A. The requestor is aware of the address of the application server, address of the first functional entity 102A and the address of the application server. The requestor has selected the relay PIN element to use in order to communicate to the first functional entity 102A. The requestor sends a first message to the relay PIN element, wherein the first message includes application specific data. The first message also includes the unique identity of the requestor, address of the application server, address of the relay PIN element towards which the first message is sent, and other required information. The first message also includes unique identity of the first message which can be used to correlate the first response message.

The relay PIN element checks whether the requestor is allowed to use the relay service. If authorized, the relay PIN element stores the unique identity of the first message along with the identity of the requestor and the layer-2 address of the requestor. If the requestor is allowed to use the relay service, the relay PIN element forwards the second message to the first functional entity. The relay PIN element adds identity to the second message. The first functional entity 102A checks whether the requestor is authorized or not. If authorized, the relay PIN element stores the unique identity of the second message along with identity of the requestor, identity of the relay PIN element and the layer-2 address of the relay PIN element. The first functional entity 102A sends the third message to the application server 112. If the application server 112 is within PIN, the first functional entity 102A sends the third message to the application server. If the application server 112 is not located within the PIN 100, then the first functional entity 102A sends the third message towards the application server 112 via the 3GPP network.

The application server 112 processes the third message from the requestor and sends a third response back to the requestor using the first functional entity 102A. The third response message includes the unique message identity along with identity of the requestor. The first functional entity 102A checks the stored details and forwards the response message towards the relay PIN element. The relay PIN element checks the stored details and forwards the third response message to the requestor.

## Claims

1. A personal internet of things, IoT, network and residential network, PIRates, management server (102B), PMS, in a personal IoT network, PIN, the PMS (102B) comprising:
at least one processor configured to support management capabilities of a PIRates network; and
at least one interface supporting interaction between the PMS (102B), a PIRates gateway (102A) configured to provide gateway functionality within the PIRates network, and at least one PIN element configured with PIRates clients which communicate within the PIRates network, the at least one PIN element comprising a PIN element,
wherein the at least one processor is further configured to
receive (302), from a first PIRates client of the PIRates clients, a first message including information on the first PIRates client;
authorize (304) the first PIRates client upon receiving the first message;
add (306) the first PIRates client into the PIN (100), and generate a list of other PIN elements which can be used as relays by the first PIRates client when the first PIRates client is not directly within communication of the PIRates gateway (102A), wherein the list comprises a second PIRates client of the PIRates clients;
send (308) a first response message to the first PIRates client; and
send (310) to the second PIRates client, a second message including information on the first PIRates client.

2. The PMS (102B) of claim 1, wherein the PMS is further configured to authorize the PIN element to access the PIN.

3. The PMS (102B) of claim 1, wherein the at least one processor is further configured to authorize the PIRates gateway (102A).

4. The PMS (102B) of claim 1, wherein the at least one processor is further configured to maintain a registration of the PIN element including the PIN element's available services, and capability to act as the relay to other PIN elements.

5. The PMS (102B) of claim 1, wherein the information on the first PIRates client includes at least one of capabilities of the first PIRates client, visibility discoverable by other PIN elements within the PIN or discoverable by other UEs outside the PIN, and access type supported for a communication.

6. The PMS (102B) of claim 5, wherein the information on the first PIRates client further includes at least one of user readable name, manufacturer details, list of application identities on the first PIRates client, and layer-2 address of the first PIRates client.

7. The PMS (102B) of claim 1, wherein the first response message includes a lifetime of the PIN.

8. A method performed by a personal internet of things, IoT, network, PIN, including a personal IoT network and residential network, PIRates, management server (102B), PMS, a PIRates gateway (102A), and at least one PIN element configured with PIRates clients, the at least one PIN element comprising a PIN element, the method comprising:
receiving (302), from a first PIRates client of the PIRates clients, a first message including information on the first PIRates client;
authorizing, by the PMS (102B), the first PIRates client upon receiving the first message;
adding (306) the first PIRates client into the PIN (100), and generating a list of other PIN elements which can be used as relays by the first PIRates client when the first PIRates client is not directly within communication of the PIRates gateway (102A), wherein the list comprises a second PIRates client of the PIRates clients;
sending (308), by the PMS (102B), a first response message to the first PIRates client; and
sending (310), by the PMS (102B) to the second PIRates client, a second message including information on the first PIRates client.

9. The method of claim 8, wherein the PMS (102B) supports management capabilities of a PIRates network, and
wherein PIRates gateway (102A) provides gateway functionality within the PIRates network.

10. The method of claim 8, wherein the information on the first PIRates client includes at least one of capabilities of the first PIRates client, visibility discoverable by other PIN elements within the PIN or discoverable by other UEs outside the PIN, and access type supported for a communication.

11. The method of claim 8, wherein the information on the first PIRates client further includes at least one of user readable name, manufacturer details, list of application identities on the first PIRates client, and layer-2 address of the first PIRates client.

12. The method of claim 8, wherein the PMS (102B) is further configured to authorize the PIN element to access the PIN.

13. The method of claim 8, wherein the PMS (102B) is further configured to authorize the PIRates gateway (102A).

14. The method of claim 8, wherein the PMS (102B) is further configured to maintain a registration of the PIN element including the PIN element's available services, and capability to act as the relay to other PIN elements.

15. The method of claim 8, wherein the first response message includes a lifetime of the PIN.

## Patentansprüche

1. Persönlicher Internet der Dinge-, IoT, -Netzwerk- und Heimnetzwerk-, PIRates, - Verwaltungsserver (102B), PMS, in einem persönlichen IoT-Netzwerk, PIN, wobei der PMS (102B) Folgendes umfasst:
mindestens einen Prozessor, der dazu konfiguriert ist, Verwaltungsfähigkeiten eines PIRates-Netzwerks zu unterstützen; und
mindestens eine Schnittstelle, die die Interaktion zwischen dem PMS (102B), einem PIRates-Gateway (102A), das dazu konfiguriert ist, Gateway-Funktionalität innerhalb des PIRates-Netzwerks bereitzustellen, und mindestens einem PIN-Element, das mit PIRates-Clients konfiguriert ist, die innerhalb des PIRates-Netzwerks kommunizieren, unterstützt, wobei das mindestens eine PIN-Element ein PIN-Element umfasst,
wobei der mindestens eine Prozessor ferner dazu konfiguriert ist,
von einem ersten PIRates-Client der PIRates-Clients eine erste Nachricht, die Informationen über den ersten PIRates-Client enthält, zu empfangen (302);
den ersten PIRates-Client nach Empfang der ersten Nachricht zu autorisieren (304);
den ersten PIRates-Client zu dem PIN (100) hinzuzufügen (306) und eine Liste anderer PIN-Elemente zu erzeugen, die vom ersten PIRates-Client als Relais genutzt werden können, wenn sich der erste PIRates-Client nicht direkt in der Kommunikation des PIRates-Gateways (102A) befindet, wobei die Liste einen zweiten PIRates-Client der PIRates-Clients umfasst;
eine erste Antwortnachricht an den ersten PIRates-Client zu senden (308); und
eine zweite Nachricht, die Informationen über den ersten PIRates-Client enthält, an den zweiten PIRates-Client zu senden (310).

2. PMS (102B) nach Anspruch 1, wobei der PMS ferner dazu konfiguriert ist, das PIN-Element zum Zugriff auf das PIN zu autorisieren.

3. PMS (102B) nach Anspruch 1, wobei der mindestens eine Prozessor ferner dazu konfiguriert ist, das PIRates-Gateway (102A) zu autorisieren.

4. PMS (102B) nach Anspruch 1, wobei der mindestens eine Prozessor ferner dazu konfiguriert ist, eine Registrierung des PIN-Elements einschließlich der verfügbaren Dienste des PIN-Elements und die Fähigkeit, als Relais für andere PIN-Elemente zu fungieren, aufrechtzuerhalten.

5. PMS (102B) nach Anspruch 1, wobei die Informationen über den ersten PIRates-Client mindestens eines von Folgendem umfassen: Fähigkeiten des ersten PIRates-Clients, Sichtbarkeit, die von anderen PIN-Elementen innerhalb des PIN oder von anderen UEs außerhalb des PIN erkannt werden kann, und einen für eine Kommunikation unterstützten Zugriffstyp.

6. PMS (102B) nach Anspruch 5, wobei die Informationen über den ersten PIRates-Client ferner mindestens eines von Folgendem umfassen: einen für den Benutzer lesbaren Namen, Herstellerangaben, eine Liste von Anwendungsidentitäten auf dem ersten PIRates-Client und eine Layer-2-Adresse des ersten PIRates-Clients.

7. PMS (102B) nach Anspruch 1, wobei die erste Antwortnachricht eine Lebensdauer des PIN enthält.

8. Verfahren, das von einem persönlichen Internet der Dinge-, IoT, -Netzwerk, PIN, durchgeführt wird, das einen persönlichen IoT-Netzwerk- und Heimnetzwerk-, PIRates, - Verwaltungsserver (102B), PMS, ein PIRates-Gateway (102A) und mindestens ein PIN-Element umfasst, das mit PIRates-Clients konfiguriert ist, wobei das mindestens eine PIN-Element ein PIN-Element umfasst, wobei das Verfahren Folgendes umfasst:
Empfangen (302) einer ersten Nachricht von einem ersten PIRates-Client der PIRates-Clients, die Informationen über den ersten PIRates-Client enthält;
Autorisieren des ersten PIRates-Clients durch den PMS (102B) nach Empfang der ersten Nachricht;
Hinzufügen (306) des ersten PIRates-Clients zum PIN (100) und Erzeugen einer Liste anderer PIN-Elemente, die vom ersten PIRates-Client als Relais genutzt werden können, wenn sich der erste PIRates-Client nicht direkt in der Kommunikation des PIRates-Gateways (102A) befindet, wobei die Liste einen zweiten PIRates-Client der PIRates-Clients umfasst;
Senden (308) einer ersten Antwortnachricht durch den PMS (102B) an den ersten PIRates-Client; und
Senden (310) einer zweiten Nachricht, die Informationen über den ersten PIRates-Client enthält, durch den PMS (102B) an den zweiten PIRates-Client.

9. Verfahren nach Anspruch 8, wobei der PMS (102B) Verwaltungsfähigkeiten eines PIRates-Netzwerks unterstützt, und
wobei das PIRates-Gateway (102A) Gateway-Funktionalität innerhalb des PIRates-Netzwerks bereitstellt.

10. Verfahren nach Anspruch 8, wobei die Informationen über den ersten PIRates-Client mindestens eines von Folgendem umfassen: Fähigkeiten des ersten PIRates-Clients, Sichtbarkeit, die von anderen PIN-Elementen innerhalb des PIN oder von anderen UEs außerhalb des PIN erkannt werden kann, und einen für eine Kommunikation unterstützten Zugriffstyp.

11. Verfahren nach Anspruch 8, wobei die Informationen über den ersten PIRates-Client ferner mindestens eines von Folgendem umfassen: einen für den Benutzer lesbaren Namen, Herstellerangaben, eine Liste von Anwendungsidentitäten auf dem ersten PIRates-Client und eine Layer-2-Adresse des ersten PIRates-Clients.

12. Verfahren nach Anspruch 8, wobei der PMS (102B) ferner dazu konfiguriert ist, das PIN-Element zum Zugriff auf das PIN zu autorisieren.

13. Verfahren nach Anspruch 8, wobei der PMS (102B) ferner dazu konfiguriert ist, das PIRates-Gateway (102A) zu autorisieren.

14. Verfahren nach Anspruch 8, wobei der PMS (102B) ferner dazu konfiguriert ist, eine Registrierung des PIN-Elements einschließlich der verfügbaren Dienste des PIN-Elements und die Fähigkeit, als Relais für andere PIN-Elemente zu fungieren, aufrechtzuerhalten.

15. Verfahren nach Anspruch 8, wobei die erste Antwortnachricht eine Lebensdauer des PIN enthält.

## Revendications

1. Serveur de gestion (102B), PMS, de réseau personnel de l'Internet des objets, IoT, et de réseau résidentiel, PIRates, dans un réseau IoT personnel, PIN, le PMS (102B) comprenant :
au moins un processeur configuré pour prendre en charge des capacités de gestion d'un réseau PIRates ; et
au moins une interface prenant en charge une interaction entre le PMS (102B), une passerelle PIRates (102A) configurée pour fournir une fonctionnalité de passerelle au sein du réseau PIRates, et au moins un élément PIN configuré avec des clients PIRates qui communiquent au sein du réseau PIRates, l'au moins un élément PIN comprenant un élément PIN,
dans lequel l'au moins un processeur est en outre configuré pour :
recevoir (302), en provenance d'un premier client PIRates parmi les clients PIRates, un premier message comprenant des informations sur le premier client PIRates ;
autoriser (304) le premier client PIRates lors de la réception du premier message ;
ajouter (306) le premier client PIRates dans le PIN (100), et générer une liste d'autres éléments PIN qui peuvent être utilisés en tant que relais par le premier client PIRates lorsque le premier client PIRates n'est pas directement en communication avec la passerelle PIRates (102A), dans lequel la liste comprend un second client PIRates parmi les clients PIRates ;
envoyer (308) un premier message de réponse au premier client PIRates ; et
envoyer (310), au second client PIRates, un second message comprenant des informations sur le premier client PIRates.

2. PMS (102B) selon la revendication 1, dans lequel le PMS est en outre configuré pour autoriser l'élément PIN à accéder au PIN.

3. PMS (102B) selon la revendication 1, dans lequel l'au moins un processeur est en outre configuré pour autoriser la passerelle PIRates (102A).

4. PMS (102B) selon la revendication 1, dans lequel l'au moins un processeur est en outre configuré pour maintenir un enregistrement de l'élément PIN comprenant les services disponibles de l'élément PIN, et une capacité à agir en tant que relais pour d'autres éléments PIN.

5. PMS (102B) selon la revendication 1, dans lequel les informations sur le premier client PIRates comprennent au moins un élément parmi des capacités du premier client PIRates, une visibilité pouvant être découverte par d'autres éléments PIN au sein du PIN ou pouvant être découverte par d'autres UE à l'extérieur du PIN, et un type d'accès pris en charge pour une communication.

6. PMS (102B) selon la revendication 5, dans lequel les informations sur le premier client PIRates comprennent en outre au moins un élément parmi un nom lisible par l'utilisateur, des détails du fabricant, une liste d'identités d'application sur le premier client PIRates, et une adresse de couche 2 du premier client PIRates.

7. PMS (102B) selon la revendication 1, dans lequel le premier message de réponse comprend une durée de vie du PIN.

8. Procédé exécuté par un réseau personnel de l'Internet des objets, IoT, PIN, comprenant un serveur de gestion (102B), PMS, de réseau IoT personnel et de réseau résidentiel, PIRates, une passerelle PIRates (102A), et au moins un élément PIN configuré avec des clients PIRates, l'au moins un élément PIN comprenant un élément PIN, le procédé comprenant :
recevoir (302), en provenance d'un premier client PIRates parmi les clients PIRates, un premier message comprenant des informations sur le premier client PIRates ;
autoriser, par le PMS (102B), le premier client PIRates lors de la réception du premier message ;
ajouter (306) le premier client PIRates dans le PIN (100), et générer une liste d'autres éléments PIN qui peuvent être utilisés en tant que relais par le premier client PIRates lorsque le premier client PIRates n'est pas directement en communication avec la passerelle PIRates (102A), dans lequel la liste comprend un second client PIRates parmi les clients PIRates ;
envoyer (308), par le PMS (102B), un premier message de réponse au premier client PIRates ; et
envoyer (310), par le PMS (102B) au second client PIRates, un second message comprenant des informations sur le premier client PIRates.

9. Procédé selon la revendication 8, dans lequel le PMS (102B) prend en charge des capacités de gestion d'un réseau PIRates, et
dans lequel la passerelle PIRates (102A) fournit une fonctionnalité de passerelle au sein du réseau PIRates.

10. Procédé selon la revendication 8, dans lequel les informations sur le premier client PIRates comprennent au moins un élément parmi des capacités du premier client PIRates, une visibilité pouvant être découverte par d'autres éléments PIN au sein du PIN ou pouvant être découverte par d'autres UE à l'extérieur du PIN, et un type d'accès pris en charge pour une communication.

11. Procédé selon la revendication 8, dans lequel les informations sur le premier client PIRates comprennent en outre au moins un élément parmi un nom lisible par l'utilisateur, des détails du fabricant, une liste d'identités d'application sur le premier client PIRates, et une adresse de couche 2 du premier client PIRates.

12. Procédé selon la revendication 8, dans lequel le PMS (102B) est en outre configuré pour autoriser l'élément PIN à accéder au PIN.

13. Procédé selon la revendication 8, dans lequel le PMS (102B) est en outre configuré pour autoriser la passerelle PIRates (102A).

14. Procédé selon la revendication 8, dans lequel le PMS (102B) est en outre configuré pour maintenir un enregistrement de l'élément PIN comprenant les services disponibles de l'élément PIN, et une capacité à agir en tant que relais pour d'autres éléments PIN.

15. Procédé selon la revendication 8, dans lequel le premier message de réponse comprend une durée de vie du PIN.
